# EUROPÄISCHE PATENTSCHRIFT

(11) **EP 3 295 436 B1**
(45) Veröffentlichungstag und Bekanntmachung des Hinweises auf die Patenterteilung: **03.07.2019**
(21) Anmeldenummer: 16723982.1
(22) Anmeldetag: 10.05.2016
(51) Int. Cl.: G08B 3/10, G08B 5/36, G08B 13/196, G08B 17/10, G08B 21/22, A47L 11/33, G05D 1/02, G08B 25/00, H04N 7/18, G08B 7/06

(54) **VERFAHREN ZUM BETRIEB EINES SELBSTTÄTIG VERFAHRBAREN REINIGUNGSGERÄTES**
METHOD FOR OPERATING A SELF-PROPELLED CLEANING DEVICE
PROCÉDÉ D'UTILISATION D'UN APPAREIL DE NETTOYAGE À DÉPLACEMENT AUTONOME

(30) Priorität: 13.05.2015 DE 102015107598
(43) Veröffentlichungstag der Anmeldung: 21.03.2018
(73) Patentinhaber: Vorwerk & Co. Interholding GmbH, 42275 Wuppertal (DE)
(72) Erfinder: HAHN, Pia, 58332 Schwelm (DE)
(74) Vertreter: Müller, Enno
(86) Internationale Anmeldenummer: PCT/EP2016/060367
(87) Internationale Veröffentlichungsnummer: WO 2016/180796

(56) Entgegenhaltungen:
- EP-A1- 2 423 893
- EP-A2- 2 617 341
- JP-A- 2014 142 742
- US-A1- 2007 296 570
- US-A1- 2012 221 174
- US-A1- 2014 207 280

## Beschreibung

Die Erfindung betrifft ein Verfahren zum Betrieb eines selbsttätig verfahrbaren Reinigungsgerätes, insbesondere eines Saug- und/oder Wischroboters, wobei das Reinigungsgerät auf der Basis einer gespeicherten Raumkarte in einem oder mehreren Räumen fährt und dort gegebenenfalls Reinigungsaufgaben ausführt, wobei das Reinigungsgerät darüber hinaus Informationen von einem Brandsensor empfängt.

Verfahren zum Betrieb eines solchen Reinigungsgerätes sind im Stand der Technik hinreichend bekannt. Dabei fährt das Reinigungsgerät, insbesondere der Reinigungsroboter, anhand einer gespeicherten Raumkarte innerhalb einer Wohnung hin und her und führt dabei Reinigungsaufgaben anhand eines Bewegungsmusters aus. Es ist ebenfalls bekannt, solche Reinigungsgeräte, welche vorrangig Reinigungsaufgaben dienen, zusätzlich mit weiteren Funktionen auszustatten, wie hier beispielsweise der Interaktion mit einem Brandsensor. Die Druckschrift WO 2014/000009 A2 offenbart beispielsweise ein Verfahren, bei welchem ein selbsttätig verfahrbares Reinigungsgerät von einer Brandmeldeanlage zu einem Brandort geschickt wird, um dort Bilder oder Videos aufzunehmen und diese Einsatzkräften zur Verfügung zu stellen. Darüber hinaus kann das Reinigungsgerät mittels eines Sensors hilfebedürftige Personen erkennen und versuchen, mit diesen Kontakt aufzunehmen, um festzustellen, ob diese bei Bewusstsein sind.

Aus der US 2012/0221174 A1 ist ein Verfahren zum Betrieb eines selbsttätig verfahrbaren Reinigungsgerätes bekannt, bei welchem das Reinigungsgerät in einem oder mehreren Räumen aufgrund etwa von gespeicherten oder empfangenen Koordinaten verfahren und dort Reinigungsaufgaben ausführen kann. Aus der US 2007/0296570 A1 ist ein Feueralarmroboter bekannt, der sich aufgrund eigener Sensoren zu verschiedenen Stellen in einem Gebäude bewegen kann. Wenn eine Bedingung erfasst wird, die auf ein Feuer schließen lässt, bewegt sich der Roboter zu der Stelle oder dem Raum hin, an welcher oder in welchem diese Bedingung gegeben ist.

Die genannten Verfahren können Einsatzkräften im Brandfall zusätzliche Informationen zur Verfügung stellen, bieten jedoch keine bis wenig Hilfestellung für in den Räumen anwesende Personen.

Der Erfindung stellt sich daher die Aufgabe, ein Verfahren anzugeben, welches in den Räumen anwesenden Personen aktive Hilfe bieten kann.

Diese Aufgabe ist zunächst beim Gegenstand des Anspruches 1 gelöst, wobei darauf abgestellt ist, dass das Reinigungsgerät im Falle eines Brandalarms ein akustisches und/oder optisches Signal ausgibt und sich ausgehend von seinem aktuellen Standort zu einem Notausgang oder einem sicheren Standort bewegt.

Mit der Erfindung wird einer in den Räumen anwesenden Person aktive Hilfe angeboten, um die Räumlichkeiten zu verlassen und nicht ausschließlich passiv auf das Eintreffen der Einsatzkräfte warten zu müssen. Der Erfindung liegt die Erkenntnis zugrunde, dass es im Falle eines Brandes zumeist nicht möglich ist, sich mittels der eigenen Sehkraft zu orientieren, da die Rauchentwicklung häufig so stark ist, dass eine anwesende Person nichts mehr sieht. Insofern kann sich die Person nur noch taktil orientieren oder mit Hilfe ihres Gehörs. Erfindungsgemäß sendet das Reinigungsgerät nun ein akustisches und/oder optisches Signal aus, welches durch die Person wahrgenommen werden kann. Ein optisches Signal dient dabei nur für diejenigen Fälle, in welchen sich die Person in unmittelbarer Nähe des Reinigungsgerätes befindet. Erfindungsgemäß folgt die Person dem akustischen und/optischen Signal und somit auch dem sich bewegenden Reinigungsgerät zu einem Notausgang oder einem sicheren Standort. Bei dem sicheren Standort kann es sich beispielsweise um einen brandgeschützten Raum oder um einen Platz vor einem offenen Fenster handeln. Zusätzlich kann auch vorgesehen sein, dass die Person eine an dem Reinigungsgerät befestigte Leine, vorzugsweise mit einem Griff, ergreifen kann und dem Reinigungsgerät, ähnlich einem Hund, folgt. Somit kann die Person auch ihren taktilen Sinn benutzen.

Es wird vorgeschlagen, dass das Reinigungsgerät ein permanentes oder periodisches Signal ausgibt. Dadurch ist es der Person möglich, die Anwesenheit des Reinigungsgerätes zu möglichst jedem Zeitpunkt festzustellen. Insbesondere eignet sich ein permanentes Signal, welches sich in der Lautstärke oder der Frequenz oder einer Tonfolge deutlich von Umgebungsgeräuschen unterscheidet. Beispielsweise kann das Reinigungsgerät dabei auch so ausgebildet sein, dass dieses Umgebungsgeräusche misst und in Abhängigkeit von der Geräuschkulisse die Art und Lautstärke des akustischen Signals wählt. Es ist auch möglich, ein periodisches Signal auszugeben, wobei die Wiederholfrequenz so hoch sein sollte, dass die Person zu jeder Zeit Hörkontakt zu dem Reinigungsgerät halten kann und sicher den Weg zu dem Notausgang beziehungsweise einem sicheren Standort findet.

Es wird vorgeschlagen, dass das Reinigungsgerät einen Brandalarm von einem externen innerhalb eines Raumes angeordneten Brandsensor empfängt, abhängig von dem Standort des Brandsensors auf den Ort des Brandes schließt und anhand der Raumkarte eine sicherste und/oder kürzeste Route zu dem Notausgang oder dem sicheren Standort bestimmt. Zu diesem Zweck ist in einem Speicher des Reinigungsgerätes eine Raumkarte hinterlegt, welche die Standorte der Brandsensoren innerhalb der Räume enthält. Wenn dann einer der Brandsensoren einen Brandalarm aussendet, kann das Reinigungsgerät mittels der gespeicherten Raumkarte sofort den Brandort ermitteln. Dabei kann der Brandort umso genauer bestimmt werden, je mehr Brandsensoren innerhalb der Räume angeordnet sind. In der Raumkarte ist zudem der Ort eines Notausgangs hinterlegt sowie weitere Informationen über die Orte von Türen und Fenstern. Darüber hinaus ist dem Reinigungsgerät selbstverständlich auch sein eigener Standort bekannt. Anhand dieser Informationen berechnet eine Recheneinheit des Reinigungsgerätes die sicherste und/oder kürzeste Route von dem aktuellen Standort des Reinigungsgerätes zu dem Notausgang beziehungsweise einem sicheren Standort. Die Route kann dabei situationsbedingt entweder die Route zu dem Notausgang oder die Route zu einem sicheren Standort bevorzugen, je nachdem, ob einer der Wege versperrt ist oder wesentlich kürzer ist als der andere. Gegebenenfalls muss zusätzlich der aktuelle Standort der anwesenden Person berücksichtigt werden, sofern dieser wesentlich von dem Standort des Reinigungsgerätes abweicht. In diesem Fall muss sich das Reinigungsgerät zunächst der wartenden Person annähern, um diese anschließend zu dem Notausgang bzw. dem sicheren Standort zu begleiten. In diesem Zusammenhang ist es selbstverständlich auch möglich, dass das Reinigungsgerät einen eigenen Brandsensor aufweist, wobei das Reinigungsgerät zunächst eine Erkundungsfahrt unternehmen kann, um den genauen Brandort in Erfahrung zu bringen, bevor das Reinigungsgerät die Person dann zu dem Notausgang oder dem sicheren Standort führt.

Vorteilhaft detektiert das Reinigungsgerät eine in dem Raum anwesende Person und fordert diese mittels einer Sprachausgabe zum Folgen zum Notausgang beziehungsweise sicheren Standort auf. Das Reinigungsgerät fährt somit im Brandfall nicht sofort in Richtung des Notausgangs beziehungsweise des sicheren Standortes, sondern prüft zunächst, ob sich eine Person innerhalb der Räume befindet. Um einer anwesenden Person die Anwesenheit des Reinigungsgerätes mitzuteilen, sendet das Reinigungsgerät eine Sprachmitteilung aus, welche beispielsweise eine Aufforderung enthält, dem Reinigungsgerät zu dem Notausgang beziehungsweise dem sicheren Standort zu folgen. Die anwesende Person hat somit die Möglichkeit, dem Reinigungsgerät zu folgen, auch wenn diese nicht über die Anwesenheit und Funktionsweise des Reinigungsgerätes informiert ist. Gegebenenfalls können der Person weitere Informationen übermittelt werden, beispielsweise wie weit es zu dem betreffenden Notausgang beziehungsweise sicheren Standort ist, in welchem Raum der Brand ausgebrochen ist und wie viele weitere Personen sich gegebenenfalls in den Räumen befinden.

Des Weiteren empfiehlt es sich, dass das Reinigungsgerät mittels einer Detektionseinrichtung, insbesondere eines akustischen Sensors oder Ultraschallsensors, misst, ob die Person dem Reinigungsgerät zum Notausgang beziehungsweise sicheren Standort folgt. Die Geschwindigkeit des Reinigungsgerätes kann somit darauf abgestimmt werden, wie schnell die Person dem Reinigungsgerät folgt. Sofern die Person beispielsweise sehr unsicher ist, kann das Reinigungsgerät mit sehr langsamer Geschwindigkeit fahren oder Ruhepausen einlegen. Gegebenenfalls kann es erforderlich sein, die Aufforderung zum Folgen zum Notausgang beziehungsweise sicheren Standort zu wiederholen, da es möglich ist, dass die Person dem Reinigungsgerät nur zufällig folgt, jedoch eine vorhergehende Sprachausgabe nicht verstanden hat. Es empfiehlt sich, dass die Detektionseinrichtung auch in verrauchten Räumen funktioniert. Es eignet sich somit insbesondere ein akustischer Sensor, welcher von der Person abgegebene Geräusche detektiert, oder ein Ultraschallsensor, wobei letzterer aufgrund der häufig vorhandenen lauten Geräuschkulisse, zu bevorzugen ist.

Neben oder alternativ zu dem vorgenannten Verfahren, bei welchem eine Person zu einem Notausgang beziehungsweise sicheren Standort geführt wird, kann das Verfahren weitere ergänzende Aufgaben erfüllen. In diesem Sinne wird beispielsweise vorgeschlagen, dass das Reinigungsgerät zusätzlich zu den üblichen Reinigungsaufgaben Informationen von einer Einbruchmeldeanlage empfängt und im Falle eines Einbruchs einen Alarm ausgibt, wobei das Reinigungsgerät als Alarm eine Reinigungsaufgabe ausführt und/oder ein eine Menschenstimme enthaltendes Signal durch eine Sprachausgabe eines aufgezeichneten Gesprächs oder eine in einem Speicher hinterlegte Sequenz eines Hundegebells ausgibt.

Erfindungsgemäß kann das Reinigungsgerät somit in Kombination mit einer in den Räumen angeordneten Einbruchmeldeanlage eingesetzt werden. Bei der Einbruchmeldeanlage kann es sich entweder um eine ortsfest innerhalb der Räume installierte Einbruchmeldeanlage handeln, alternativ kann jedoch auch das Reinigungsgerät selbst mit einem Bewegungssensor oder ähnlichem ausgestattet sein, anhand dessen Signal auf einen Einbruch geschlossen werden kann. Im Sinne einer Einbruchmeldeanlage sind beispielsweise Magnetkontakte an Fenstern und Türen, Lichtschranken, Körperschallmelder, Bewegungsmelder oder Ähnliches gemeint. Im Falle eines detektierten Einbruchs simuliert das Reinigungsgerät erfindungsgemäß die Anwesenheit einer Person innerhalb der überwachten Räume, um einen potenziellen Einbrecher abzuschrecken und zur Aufgabe des Einbruchsversuchs zu veranlassen. In dem Sinne führt das Reinigungsgerät als Alarm eine Reinigungsaufgabe aus, beispielsweise kann das Reinigungsgerät selbsttätig innerhalb eines Raumes verfahren und dabei den Boden saugen. Insbesondere wenn sich das Reinigungsgerät dabei in einem Nachbarraum befindet, so dass der Einbrecher keine Sicht auf das Reinigungsgerät hat, kann diese Maßnahme hilfreich sein. Zudem kann das Reinigungsgerät als Sprachausgabe ein aufgezeichnetes Gespräch abspielen oder Hundegebell, welches auf die Anwesenheit eines Hundes schließen lässt. Insgesamt währen auch weitere Maßnahmen denkbar, beispielsweise das ferngesteuerte Einschalten einer Deckenbeleuchtung, eines Fernsehers oder Ähnliches.

Darüber hinaus kann vorgesehen sein, dass die Einbruchmeldeanlage die Anwesenheit einer Person innerhalb eines Raumes detektiert, wobei die Einbruchmeldeanlage oder das Reinigungsgerät die anwesende Person anhand in einem Speicher hinterlegter Daten identifiziert. Diese Funktion ist für den Fall gedacht, dass sich eine bekannte, autorisierte Person innerhalb der Räume bewegt. Die Anwesenheit einer autorisierten Person soll nicht zu einem Alarm führen. Insofern können die in einem Speicher hinterlegten Daten beispielsweise ein Foto einer Person, die Stimme der Person, ein persönlicher Code der Person oder Ähnliches sein. Beispielsweise ist es möglich, dass die Person durch das Reinigungsgerät aufgefordert wird, einen Code zum Abschalten des Alarms über ein Touchpad oder Ähnliches einzugeben. Darüber hinaus ist es besonders vorteilhaft, wenn ein mobiles Gerät, welches die Person ohnehin mit sich trägt, beispielsweise ein Mobiltelefon, einen Code an das Reinigungsgerät sendet und die Person somit ausweist.

Es wird zudem vorgeschlagen, dass das Reinigungsgerät auf ein Kalenderprogramm eines externen Gerätes, insbesondere eines Personal Computers oder eines Mobiltelefons, zugreift, wobei die Anwesenheit der Person mit einem aktuellen Kalendereintrag verglichen wird. Diese Funktion ist beispielsweise als zusätzliche Sicherheitsüberprüfung gedacht, ob es sich bei der identifizierten Person um die anwesende Person handelt. Ein Kalendereintrag kann beispielsweise darüber informieren, dass die Person zu dem Zeitpunkt des Alarms für längere Zeit abwesend ist und somit eine nur sehr geringe Wahrscheinlichkeit besteht, dass sich diese in den Räumen aufhält. Andererseits kann in Zeiträumen, zu welchen keine Kalendereinträge vorliegen und somit davon auszugehen ist, dass sich eine oder mehrere Personen regelmäßig in den Räumen aufhalten, der Alarm ausgeschaltet werden, so dass es zu keinem Fehlalarm kommen kann. Darüber hinaus ist die Alarmfunktion jedoch auch geeignet, ein nach dem Kalender erwartetes Rückkehren einer Person, beispielsweise ein Rücckehren von Kindern aus der Schule, festzustellen. In diesem Sinne wird mit der Erfindung vorgeschlagen, dass eine Information über die Anwesenheit der Person an ein externes Gerät, insbesondere ein Mobiltelefon, übermittelt wird. Beispielsweise kann das Eintreffen der Kinder nach der Schule an ein Mobiltelefon eines Elternteiles gemeldet werden, so dass dieses die Information erhält, dass die Kinder wohlbehalten zu Hause eingetroffen sind.

Im Sinne der erfindungsgemäßen Erfüllung weiterer Aufgaben - neben der eigentlichen Reinigungsaufgabe - durch ein selbsttätig verfahrbares Reinigungsgerät, wird ebenso ein Verfahren vorgeschlagen, bei welchem das Reinigungsgerät auf ein Kalenderprogramm zugreift und in dem Kalenderprogramm enthaltene Informationen zur zeitlichen Planung von Reinigungsaufgaben verwendet, wobei das Reinigungsgerät via einer externen Kommunikationsschnittstelle auf ein Kalenderprogramm eines externen Gerätes zugreift, wobei das Reinigungsgerät aus den in dem Kalenderprogramm enthaltenen Informationen auf die Abwesenheit von Personen in einem oder mehreren Räumen zu einem bestimmten Zeitpunkt schließt und dementsprechend dort eine Reinigung durchführt.

Gemäß der Erfindung greift das Reinigungsgerät zur Ausführung von Reinigungstätigkeiten nicht nur auf einen eigenen Speicher des Reinigungsgerätes zu, sondern vielmehr auf einen Kalender eines externen Gerätes. Im Gegensatz zu einem internen Kalender des Reinigungsgerätes - welcher regelmäßig nur einen nach Tagen und Stunden gegliederten Reinigungsplan aufweist - handelt es sich bei dem externen Kalender um einen üblichen virtuellen Kalender, in welchen vorteilhaft auch mehrere Personen gleichzeitig ihre Termine eintragen. Mit Hilfe einer Auswerte- und Steuereinrichtung wertet das Reinigungsgerät die Einträge aus und errechnet daraufhin Zeiträume, in welchen bestimmte Personen nicht anwesend sind, und somit deren persönliche Räume gereinigt werden können.

Darüber hinaus wird vorgeschlagen, dass das Reinigungsgerät via der Kommunikationsschnittstelle Signale von einer oder mehreren Raumüberwachungseinrichtungen empfängt, wobei die Raumüberwachungseinrichtungen insbesondere ein Bewegungssignal innerhalb eines Raumes, einen Stromverbrauch innerhalb eines Raumes und/oder eine Betätigung eines elektrischen Schalters innerhalb eines Raumes detektieren, wobei eine Reinigung unterbleibt oder abgebrochen wird, wenn das Reinigungsgerät ein Signal von der Raumüberwachungseinrichtung empfängt, das auf die Anwesenheit einer Person schließen lässt. Erfindungsgemäß können zusätzlich auch Daten von Raumüberwachungseinrichtungen zur Ermittlung der Anwesenheit einer Person einbezogen werden. Hierbei können die Daten von Bewegungsmeldern, Kameras, Stromzählern, Lichtschaltern und ähnlichem verwendet werden, um die Reinigungsaktivitäten zu steuern, so dass es bei der Ermittlung der Anwesenheit einer Person nicht nur ausschließlich auf die Kalendereinträge ankommt. Vielmehr kann ein etwaiges gerade durchgeführtes Reinigungsprogramm geändert werden, sobald festgestellt wird, dass eine Person den Raum betritt und das Licht anschaltet oder Ähnliches.

Schließlich wird mit der Erfindung eines der vorgenannten Verfahren vorgeschlagen, bei welchem das Reinigungsgerät in ein Datenkommunikationsnetzwerk, insbesondere ein Netzwerk einer Hausautomatisierungsanlage, eingebunden ist, wobei das Reinigungsgerät Informationen von einem in das Datenkommunikationsnetzwerk eingebundenen Netzwerkgerät, insbesondere einem Brandsensor, einer Einbruchmeldeanlage und/oder einem ein Kalenderprogramm aufweisenden externen Gerät, empfängt, und/oder Informationen an ein in das Datenkommunikationsnetzwerk eingebundenes Netzwerkgerät übermittelt, wobei das Verhalten des Reinigungsgerätes und/oder des Netzwerkgerätes in Abhängigkeit von den übermittelten Informationen gesteuert wird. Dabei ist das Reinigungsgerät mit mehreren anderen Netzwerkgeräten innerhalb eines gemeinsamen Datenkommunikationsnetzwerkes verbunden. Das Datenkommunikationsnetzwerk kann vorteilhaft das Netzwerk einer Hausautomatisierungsanlage, das Internet oder auch ein anderes Netzwerk sein. Dadurch ist die Vernetzung aller elektrischen Geräte einer Hausautomatisierung möglich, wodurch einem Nutzer vielfältige Steuerungsmöglichkeiten gegeben sind. Die Hausautomatisierung kann neben klassischen Elementen, wie Lichtschaltern, Steckdosen, Rollladen- oder Markisenantrieben auch diverse Sensoren, wie beispielsweise Feuer-, Rauch-, Glasbruch- oder Bewegungssensoren, umfassen, so dass mehr oder weniger komplexe Steuerungs- oder Regelungsaufgaben automatisiert werden können. Darüber hinaus können auch Geräte der Unterhaltungselektronik und/oder Haushaltsgeräte mit einbezogen werden. Auch drahtlose Netzwerke und Verbindungen zu IT- und Kommunikationsnetzwerken sind denkbar. In diesem Sinne können auch Fernseher, Computer, Mobiltelefone, Stereoanlagen, Küchengeräte oder Ähnliches in die Hausautomatisierung einbezogen sein. Durch die Datenverbindung, insbesondere bidirektionale Kommunikationsverbindung, des Reinigungsgerätes mit einem oder mehreren weiteren Netzwerkgeräten können die Informationen, d.h. Daten, des Reinigungsgerätes beziehungsweise des Netzwerkgerätes gegenseitig zur Verfügung gestellt werden, um abhängig davon bestimmte Funktionen auszuführen. Beispielsweise kann ein Bewegungssensor einer Einbruchmeldeanlage die Anwesenheit des Reinigungsgerätes erkennen und daraufhin einen Alarm unterlassen. Hierzu übermittelt die Einbruchmeldeanlage eine Aufforderung zur Identifizierung an das Reinigungsgerät, welches daraufhin einen Identifikationscode zurück an die Einbruchmeldeanlage sendet, der mit einem hinterlegten Referenzcode verglichen wird und im Falle der Übereinstimmung das Reinigungsgerät identifiziert. Eine Vielzahl weiterer Interaktionen zwischen dem Reinigungsgerät und anderen Netzwerkgeräten des Datenkommunikationsnetzwerkes ist möglich, wobei jeweils zwei oder mehrere Geräte gleichzeitig oder zeitlich aufeinanderfolgend miteinander kommunizieren können.

Im Folgenden wird die Erfindung anhand von Ausführungsbeispielen näher erläutert. Es zeigen:
- Fig. 1: ein erfindungsgemäßes Verfahren gemäß einer ersten Ausführungsvariante während eines ersten Verfahrensschritts,
- Fig. 2: eine gespeicherte Raumkarte,
- Fig. 3: das Verfahren während eines späteren Verfahrensschritts,
- Fig. 4: ein erfindungsgemäßes Verfahren gemäß einer zweiten Ausführungsvariante während eines ersten Verfahrensschritts,
- Fig. 5: das Verfahren während eines späteren Verfahrensschritts,
- Fig. 6: ein erfindungsgemäßes Verfahren gemäß einer dritten Ausführungsvariante.

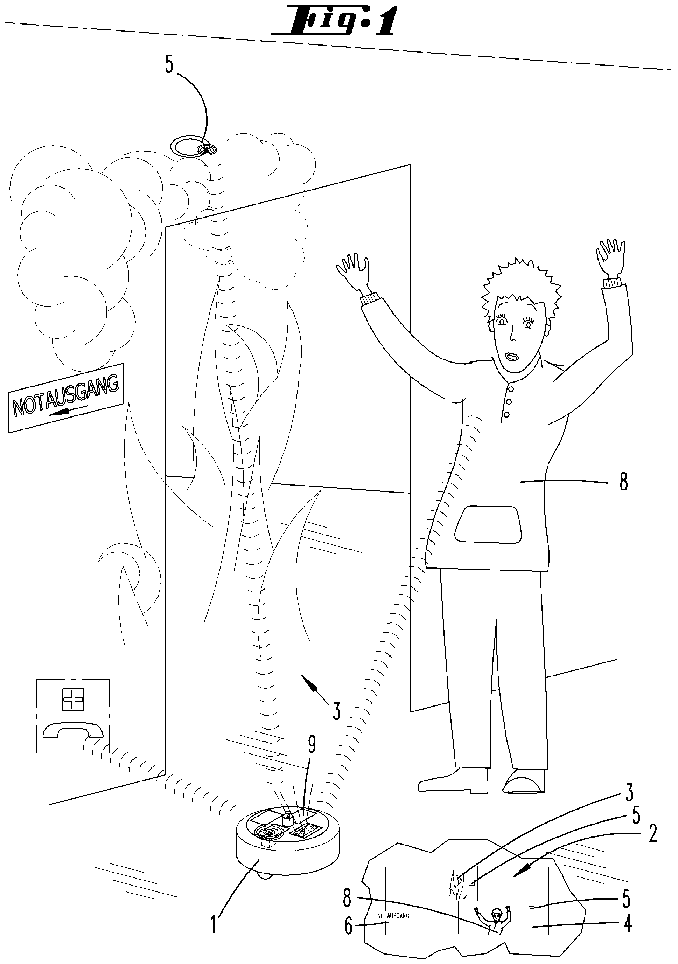

Anhand der Figuren 1 bis 3 wird im Folgenden erläutert, wie ein selbsttätig verfahrbares Reinigungsgerät 1 genutzt wird, um einer während eines Brandes in einem Raum 4 anwesenden Person 8 eine Hilfestellung zu geben, um zu einem Notausgang 6 zu gelangen.

Das Reinigungsgerät 1 ist ein selbsttätig verfahrbarer Reinigungsroboter, welcher in üblicher Weise Saug- und/oder Wischaufgaben erfüllen kann. Der Reinigungsroboter 1 verfügt über einen Speicher, in welchem unter anderem eine Raumkarte 2 gespeichert ist, welche die Lage und gegebenenfalls auch räumliche Aufteilung, Einrichtung oder Ähnliches eines oder mehrerer Räume 3, 4 enthält. In der Raumkarte 2 sind zusätzlich auch die Standorte eines oder mehrerer Brandsensoren 5 verzeichnet sowie die Lage eines Notausgangs 6 oder die Lage von Fenstern und Türen. Darüber hinaus können auch weitere Ortsinformationen gespeichert sein, welche in einem Notfall hilfreich sein können, beispielsweise der Standort eines Telefons, eines Verbandkastens oder Ähnliches. Der Reinigungsroboter 1, der eine oder die mehreren Brandsensoren 5 und gegebenenfalls weitere Netzwerkgeräte sind in ein gemeinsames Datenkommunikationsnetzwerk eingebunden, so dass gegenseitig Informationen ausgetauscht werden können.

Während des üblichen Betriebs fährt das Reinigungsgerät 1 selbsttätig in einem oder mehreren Räumen 3, 4 umher und saugt dort beispielsweise Sauggut von einem zu reinigenden Boden. In dem Fall, dass ein innerhalb eines Raumes 3, 4 installierter Brandsensor 5 einen Brand detektiert, empfängt das Reinigungsgerät 1 von diesem Brandsensor 5 eine Information über den Brand. Der Brandsensor 5 übermittelt gleichzeitig mit der Information über den Brand eine ihm zuordenbare Kennung, so dass das Reinigungsgerät 1 gleichzeitig eine Information darüber erhält, welcher der Brandsensoren 5 einen Brand meldet. Das Reinigungsgerät 1 vermerkt daraufhin in der gespeicherten Raumkarte 2 einen örtlichen Hinweis, dass in dem Raum 3, 4, in welchem sich der Brandsensor 5 befindet, oder zumindest in dessen Nähe, ein Brand ausgebrochen ist. Gegebenenfalls ist mittels einer Überwachungskamera innerhalb der Räume 3, 4 eine nähere Information darüber verfügbar, wo genau sich der Brand befindet.

Das Reinigungsgerät 1 übermittelt daraufhin eine Information über den Brand an eine Feuernotrufstelle. Hierzu verfügt das Reinigungsgerät über ein Funkmodul. Gegebenenfalls können mit dem Notruf weitere Informationen an die Feuernotrufstelle übermittelt werden, beispielsweise die gespeicherte Raumkarte 2 mit den enthaltenen Informationen über den Ort des auslösenden Brandsensors 5, den Ort eines Notausgangs 6 oder Ähnliches. Das Reinigungsgerät 1 weist darüber hinaus eine Detektionseinrichtung 9, beispielsweise einen Ultraschallsensor, auf, welcher eine Detektion von anwesenden Personen 8 innerhalb der Räume 3, 4 ermöglicht. Die Information über anwesende Personen 8 kann wiederum an die Feuernotrufstelle übermittelt werden. Ebenso wird diese Information auch in die Raumkarte 2 eingetragen. Somit ist die von dem Reinigungsgerät 1 erfasste Situation vollständig in der Raumkarte 2 festgehalten, so dass das Reinigungsgerät 1 daraufhin eine geeignete Betriebsstrategie errechnen kann.

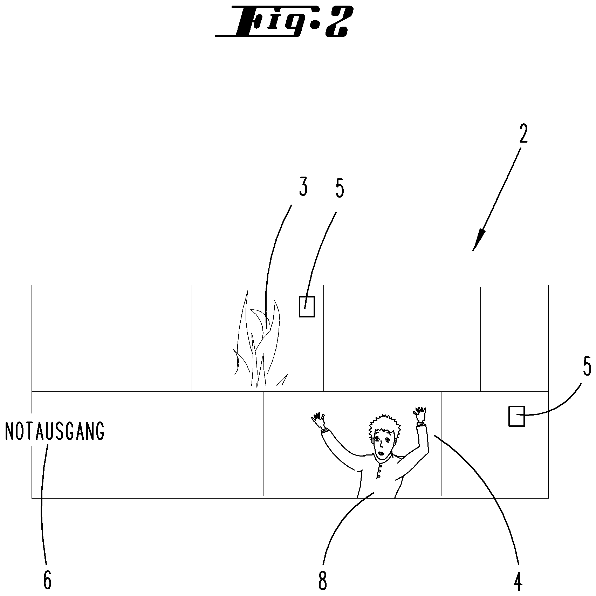

In Figur 2 ist eine detaillierte Darstellung der Raumkarte 2 gezeigt. Diese enthält einen Grundriss einer Wohnung mit mehreren Räumen 3, 4. Wie in einem üblichen Grundriss, sind hier auch Türen und Fenster, welche die Räume 3, 4 miteinander verbinden bzw. an die Außenluft führen, eingezeichnet. Beispielsweise ist derjenige Raum 3, welcher den meldenden Brandsensor 5 aufweist, mit einer Brandinformation verknüpft. Darüber hinaus ist der aktuelle Standort einer Person 8 in Raum 4 vermerkt. Der Ort des nächstliegenden Notausgangs 6 ist ebenfalls in dem Grundriss eingezeichnet. Darüber hinaus können, wie zuvor erwähnt, eine Vielzahl weiterer Informationen hinterlegt sein, welche hier nicht zeichnerisch dargestellt sind.

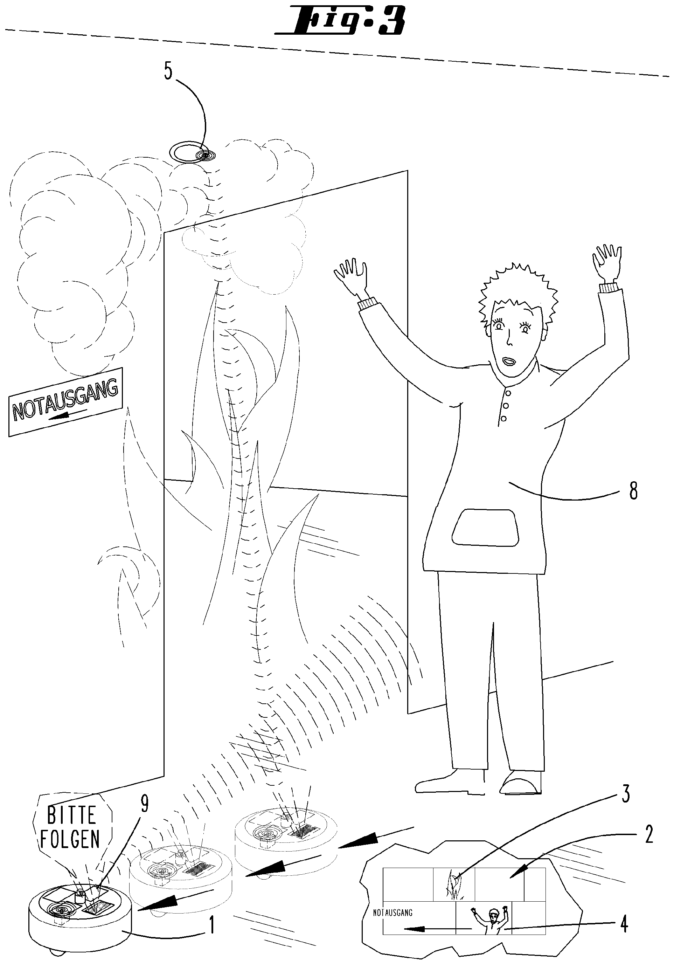

Wie in Figur 3 dargestellt, ermittelt das Reinigungsgerät 1 aus den in der Raumkarte 2 eingetragenen Informationen einen kürzesten und/oder sichersten Weg von dem Standort der Person 8 in dem Raum 4 zu dem Notausgang 6. Um die anwesende Person 8 nun zu dem Notausgang 6 führen zu können, ist es erforderlich, die Person 8 auf die Anwesenheit des Reinigungsgerätes 1 und die verfügbare Führungsfunktion des Reinigungsgerätes 1 aufmerksam zu machen. In der Praxis entsteht durch einen Brand eine so große Rauchmenge, dass die Person 8 sich in den Räumen 3, 4 nicht mehr visuell orientieren kann und häufig auch in unmittelbarer Nähe befindliche Gegenstände nicht mehr erkennt. Daher sendet das Reinigungsgerät 1 zuerst eine Information mittels einer Sprachausgabe an die Person 8 mit dem Inhalt, dass das Reinigungsgerät 1 beabsichtigt, die Person 8 zu dem Notausgang 6 zu führen. Gegebenenfalls kann die Sprachausgabe auch durch ein optisches Signal, beispielsweise ein Blinklicht, unterstützt werden, welches zumindest aus kürzeren Entfernungen noch erkannt werden kann. Somit erhält die Person 8 eine Information über die Anwesenheit des Reinigungsgerätes 1 und die Möglichkeit, dem Reinigungsgerät 1 zu dem Notausgang 6 zu folgen. Gegebenenfalls kann das Reinigungsgerät 1 dabei auch mittels der Sprachausgabe mitteilen, wann es sich in Bewegung setzen wird. Beispielsweise ist es möglich, dass das Reinigungsgerät 1 von 10 runter auf 1 zählt, so dass die Person 8 eine Möglichkeit erhält, sich auf das Folgen vorzubereiten. Daraufhin sendet das Reinigungsgerät 1 ein permanentes Signal aus, welches sich deutlich entweder in Lautstärke oder Tonfolge, von den Umgebungsgeräuschen abhebt. Hierzu kann das Reinigungsgerät 1 über eine Detektionseinrichtung für Umgebungsgeräusche verfügen, welche die Umgebungsgeräusche auswerten und sodann die Art und Lautstärke der eigenen Signalausgabe des Reinigungsgerätes 1 anpassen kann. Während sich das Reinigungsgerät 1 zu dem Notausgang 6 bewegt, prüft es in regelmäßigen Abständen, ob die Person 8 dem Reinigungsgerät 1 folgt. Gegebenenfalls ist es notwendig, die Sprachausgabe mit dem Hinweis "Bitte folgen" zu wiederholen, falls die Person 8 orientierungslos erscheint. Die Sprachausgabe kann zudem so aktualisiert werden, dass aktuelle Informationen an die Person 8 ausgegeben werden, beispielsweise der Hinweis, welche Entfernung noch bis zu dem Notausgang 6 zu überwinden ist oder Ähnliches. Das Reinigungsgerät 1 kann zudem auch über eine bidirektionale Kommunikationseinrichtung verfügen, mittels welcher eine Spracheingabe der Person 8 verarbeitbar ist. Beispielsweise kann die Person 8 auf das Reinigungsgerät 1 aktiv reagieren und anzeigen, dass sie dem Reinigungsgerät 1 zu dem Notausgang 6 folgen möchte. Das Reinigungsgerät 1 weist zudem auch eine Kommunikationsschnittstelle auf, mit welchem es der Person 8 möglich ist, eine Information an Einsatzkräfte zu übermitteln, beispielsweise über den persönlichen Gesundheitszustand, die Anwesenheit weiterer Personen 8 oder Ähnliches.

Obwohl das Reinigungsgerät 1 in dem dargestellten Ausführungsbeispiel eine Route zu dem Notausgang 6 berechnet, ist es ebenfalls möglich, dass eine Route zu einem sicheren Standort, welcher nicht der Notausgang 6 ist, berechnet wird. Der sichere Standort kann bspw. ein Platz an einem Fenster, ein Brandschutzraum oder Ähnliches sein. Die Funktionsweise des Verfahrens bleibt davon jedoch unberührt.

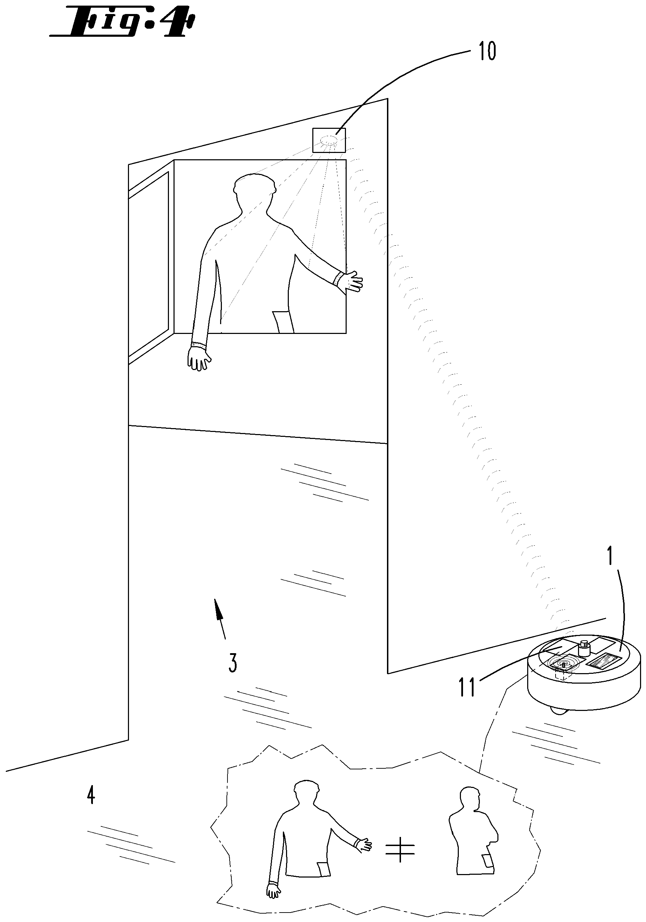

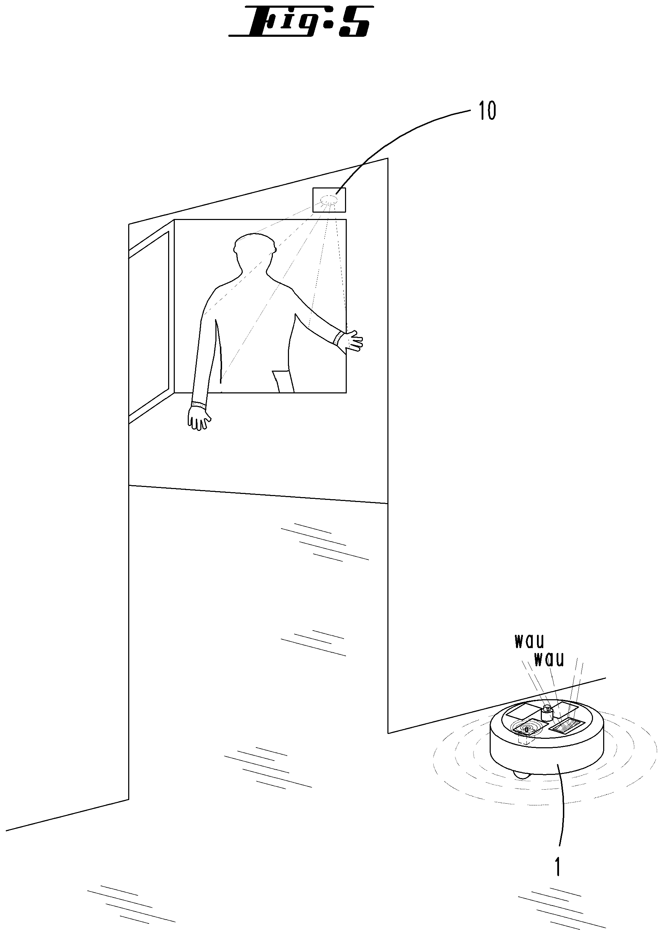

Die Figuren 4 und 5 zeigen eine zweite Ausführungsvariante eines erfindungsgemäßen Verfahrens, welches zur Abschreckung von Einbrechern dient.

Zur Ausführung des Verfahrens kommuniziert eine in einem oder mehreren Räumen 3, 4 angeordnete Einbruchmeldeanlage 10 mit dem Reinigungsgerät 1. Die Einbruchmeldeanlage 10 weist hier beispielsweise einen Bewegungsmelder auf, welcher über einem Fenster angeordnet ist. Sobald die Einbruchmeldeanlage 10 eine Bewegung im Überwachungsgebiet erkennt, meldet diese einen - vorteilhaft stummen - Alarm an das Reinigungsgerät 1. Gegebenenfalls kann die Einbruchmeldeanlage 10 weitere Informationen an das Reinigungsgerät 1 übermitteln, beispielsweise eine Aufnahme einer mit der Einbruchmeldeanlage 10 verbundenen Kamera. Diese Information wird mit in einem Speicher 11 des Reinigungsgerätes 1 hinterlegten Daten zu bekannten Personen 8 verglichen und die Alarmstrategie daraufhin angepasst. Sofern das Reinigungsgerät 1 wie in dem gezeigten Ausführungsbeispiel zu dem Ergebnis kommt, dass es sich bei dem Einbrecher nicht um eine bekannte Person handelt, zu welcher Daten in dem Speicher 11 hinterlegt sind, gibt das Reinigungsgerät 1 einen Alarm aus, welcher zum einen eine Sprachausgabe beinhaltet, die eine in dem Speicher 11 hinterlegte Sequenz eines Hundegebells ist. Zum anderen simuliert das Reinigungsgerät 1 die Anwesenheit einer Person 8 durch die Ausführung einer üblichen Reinigungsaufgabe, beispielsweise das Ausführen eines Staubsaugvorgangs, so dass der Einbrecher den Eindruck erhält, dass sich eine Person 8 in einem nicht einsehbaren Raum 3, 4 befindet, welche gerade Staub saugt. Durch diese Geräuschkulisse erhält der Einbrecher die Information, dass sowohl eine Person 8 als auch ein Hund in den Räumen 3, 4 anwesend ist, so dass ein Einbruch nicht sinnvoll erscheint.

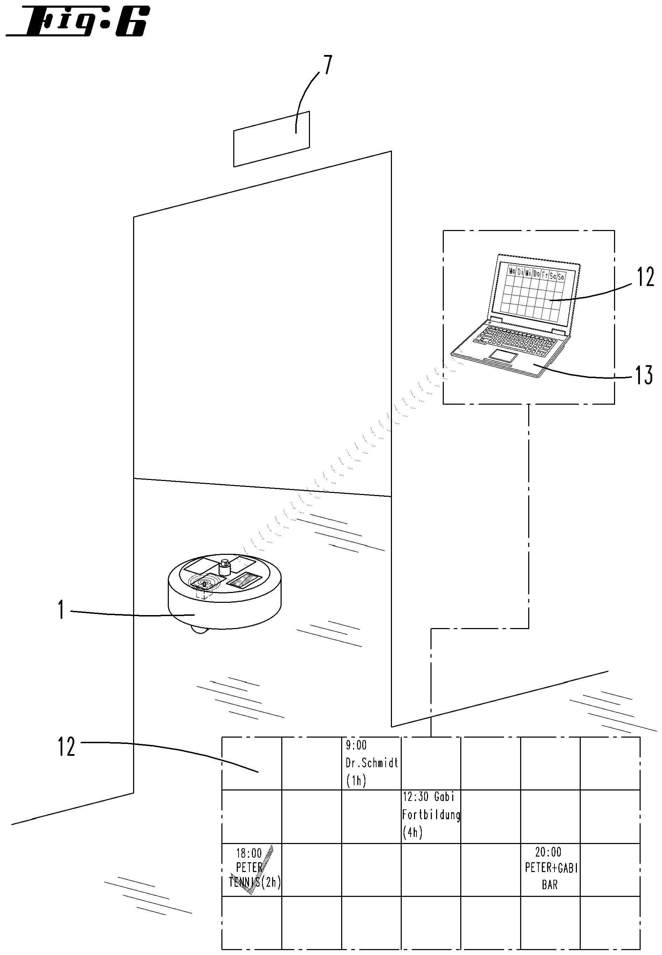

Figur 6 zeigt schließlich eine dritte Ausführungsvariante des erfindungsgemäßen Verfahrens, bei welchem eine Reinigungsstrategie des Reinigungsgerätes 1 in Abhängigkeit von einem auf einem externen Gerät 13 hinterlegten Kalenderprogramm 12 berechnet wird.

Das Reinigungsgerät 1 kommuniziert dafür mittels einer externen Kommunikations-Schnittstelle mit einem externen Gerät 13, welches hier ein Laptop ist. Auf dem externen Gerät 13 ist ein Kalenderprogramm 12 installiert, welches Termine einer oder mehrerer Personen 8 des Haushalts beinhaltet. Das Kalenderprogramm 12 ist wie üblich in Wochentage und Uhrzeiten gegliedert, wobei unterschiedliche Termine, wie Schulstunden, Vereinstraining, Verabredungen oder Ähnliches eingetragen sein können. Zu einem beliebigen Zeitpunkt prüft das Reinigungsgerät 1 die in dem Kalenderprogramm 12 eingetragenen Termine und berechnet, welche Personen 8 zu diesem Zeitpunkt in den Räumen 3, 4 anwesend sein können bzw. aufgrund von Terminen nicht anwesend sind. Daraufhin ermittelt das Reinigungsgerät 1 eine Reinigungsstrategie, welche beispielsweise eine Reinigung zuerst in denjenigen Räumen 3, 4 berücksichtigt, in welchen die betreffenden Personen 8 nur kurzfristig abwesend sind. Zusätzlich ist das Reinigungsgerät 1 mit einer Raumüberwachungseinrichtung 7 kommunikationstechnisch verbunden, welche Raumüberwachungseinrichtung 7 beispielsweise über der Wohnungstür angeordnet ist. Sofern eine Person 8 die Wohnung betritt, kann die Reinigungsstrategie des Reinigungsgerätes 1 angepasst werden. Vorteilhaft ist die Raumüberwachungseinrichtung 7 mit einer Personenerkennung gekoppelt, welche optisch oder codebasiert eine die Räume 3, 4 betretende Person 8 erkennt und daraufhin diejenigen Räume 3, 4 von der Reinigung ausschließt, welche voraussichtlich von der Person 8 benutzt werden. Räume 3, 4, welche üblicherweise nicht von dieser Person 8 betreten werden, können weiterhin gereinigt werden.

### Bezugszeichenliste:

- 1: Reinigungsgerät
- 2: Raumkarte
- 3: Raum
- 4: Raum
- 5: Brandsensor
- 6: Notausgang
- 7: Raumüberwachungseinrichtung
- 8: Person
- 9: Detektionseinrichtung
- 10: Einbruchmeldeanlage
- 11: Speicher
- 12: Kalenderprogramm
- 13: Externes Gerät

## Patentansprüche

1. Verfahren zum Betrieb eines selbsttätig verfahrbaren Reinigungsgerätes (1), insbesondere Saug- und/oder Wischroboter, wobei das Reinigungsgerät (1) auf der Basis einer gespeicherten Raumkarte (2) in einem oder mehreren Räumen (3, 4) fährt und dort gegebenenfalls Reinigungsaufgaben ausführt, wobei das Reinigungsgerät (1) darüber hinaus Informationen von einem Brandsensor (5) empfängt, insbesondere im Falle eines Brandalarms einen Notruf veranlasst, **dadurch gekennzeichnet, dass** das Reinigungsgerät (1) im Falle eines Brandalarms ein akustisches und/oder optisches Signal ausgibt und sich ausgehend von seinem aktuellen Standort zu einem Notausgang (6) oder einem sicheren Standort bewegt.

2. Verfahren nach Anspruch 1, **dadurch gekennzeichnet, dass** das Reinigungsgerät (1) ein permanentes oder periodisches Signal ausgibt.

3. Verfahren nach Anspruch 1 oder 2, **dadurch gekennzeichnet, dass** das Reinigungsgerät (1) einen Brandalarm von einem externen innerhalb eines Raumes (3, 4) angeordneten Brandsensors (5) empfängt, abhängig von dem Standort des Brandsensors (5) auf den Ort des Brandes schließt und anhand der Raumkarte (2) eine sicherste Route zu dem Notausgang (6) oder dem sicheren Standort bestimmt.

4. Verfahren nach einem der vorhergehenden Ansprüche, **dadurch gekennzeichnet, dass** das Reinigungsgerät (1) einen Brandalarm von einem externen innerhalb eines Raumes (3, 4) angeordneten Brandsensors (5) empfängt, abhängig von dem Standort des Brandsensors (5) auf den Ort des Brandes schließt und anhand der Raumkarte (2) eine kürzeste Route zu dem Notausgang (6) oder dem sicheren Standort bestimmt.

5. Verfahren nach einem der vorhergehenden Ansprüche, **dadurch gekennzeichnet, dass** das Reinigungsgerät (1) eine in dem Raum (3, 4) anwesende Person (8) detektiert und mittels einer Sprachausgabe zum Folgen zum Notausgang (6) bzw. sicheren Standort auffordert.

6. Verfahren nach Anspruch 5, **dadurch gekennzeichnet, dass** das Reinigungsgerät (1) mittels einer Detektionseinrichtung (9), insbesondere eines akustischen Sensors oder Ultraschallsensors, misst, ob die Person (8) dem Reinigungsgerät (1) zum Notausgang (6) bzw. sicheren Standort folgt.

7. Verfahren zum Betrieb eines selbsttätig verfahrbaren Reinigungsgerätes (1) nach einem der Ansprüche 1 bis 6, wobei das Reinigungsgerät (1) auf der Basis einer gespeicherten Raumkarte (2) in einem oder mehreren Räumen (3, 4) fährt und dort gegebenenfalls Reinigungsaufgaben ausführt, wobei das Reinigungsgerät (1) darüber hinaus Informationen von einer Einbruchmeldeanlage (10) empfängt und im Falle eines Einbruchs einen Alarm ausgibt, **dadurch gekennzeichnet, dass** das Reinigungsgerät (1) als Alarm eine Reinigungsaufgabe ausführt.

8. Verfahren zum Betrieb eines selbsttätig verfahrbaren Reinigungsgerätes (1) nach einem der Ansprüche 1 bis 7, wobei das Reinigungsgerät (1) auf der Basis einer gespeicherten Raumkarte (2) in einem oder mehreren Räumen (3, 4) fährt und dort gegebenenfalls Reinigungsaufgaben ausführt, wobei das Reinigungsgerät (1) darüber hinaus Informationen von einer Einbruchmeldeanlage (10) empfängt und im Falle eines Einbruchs einen Alarm ausgibt, **dadurch gekennzeichnet, dass** das Reinigungsgerät (1) als Alarm ein eine Menschenstimme enthaltendes Signal durch eine Sprachausgabe eines aufgezeichneten Gesprächs oder eine in einem Speicher hinterlegte Sequenz eines Hundegebells ausgibt.

9. Verfahren nach Anspruch 7 oder 8, **dadurch gekennzeichnet, dass** die Einbruchmeldeanlage (10) eine Anwesenheit einer Person (8) innerhalb eines Raumes (3, 4) detektiert, wobei die Einbruchmeldeanlage (10) oder das Reinigungsgerät (1) die anwesende Person (8) anhand in einem Speicher (11) hinterlegter Daten identifiziert.

10. Verfahren nach Anspruch 9, **dadurch gekennzeichnet, dass** das Reinigungsgerät (1) auf ein Kalenderprogramm (12) eines externen Gerätes (13), insbesondere eines Personal Computers oder eines Mobiltelefons, zugreift, wobei die Anwesenheit der Person (8) mit einem aktuellen Kalendereintrag verglichen wird.

11. Verfahren nach Anspruch 10, **dadurch gekennzeichnet, dass** eine Information über die Anwesenheit der Person (8) an ein externes Gerät (14), insbesondere ein Mobiltelefon, übermittelt wird.

## Claims

1. A method for operating a self-propelled cleaning device (1), in particular a vacuuming and/or wiping robot, the cleaning device (1) traveling in one or more rooms (3, 4) on the basis of a stored room map (2) and, if necessary, carrying out cleaning jobs therein, the cleaning device (1) furthermore receiving information from a fire sensor (5), in particular initiating an emergency call in the event of a fire alarm, **characterized in that** in the event of a fire alarm, the cleaning device (1) outputs an acoustic and/or optical signal and moves, starting from its current location, towards an emergency exit (6) or a safe location.

2. The method according to claim 1, **characterized in that** the cleaning device (1) outputs a permanent or periodic signal.

3. The method according to claim 1 or 2, **characterized in that** the cleaning device (1) receives a fire alarm from an external fire sensor (5) disposed within a room (3, 4), extrapolates the location of the fire in dependence on the location of the fire sensor (5) and determines, based on the room map (2), a safest route to the emergency exit (6) or the safe location.

4. The method according to any one of the preceding claims, **characterized in that** the cleaning device (1) receives a fire alarm from an external fire sensor (5) disposed within a room (3, 4), extrapolates the location of the fire in dependence on the location of the fire sensor (5) and determines, based on the room map (2), a shortest route to the emergency exit (6) or the safe location.

5. The method according to any one of the preceding claims, **characterized in that** the cleaning device (1) detects a person (8) present in the room (3, 4) and requests the person by means of a voice output to follow to the emergency exit (6) and the safe location, respectively.

6. The method according to claim 5, **characterized in that** the cleaning device (1) measures by means of a detection system (9), in particular an acoustic sensor or ultrasonic sensor, whether the person (8) follows the cleaning device (1) to the emergency exit (6) and the safe location, respectively.

7. The method for operating a self-propelled cleaning device (1) according to any one of claims 1 to 6, the cleaning device (1) traveling in one or more rooms (3, 4) on the basis of a stored room map (2) and, if necessary, carrying out cleaning jobs therein, the cleaning device (1) furthermore receiving information from a burglar alarm system (10) and outputting an alarm in the event of a burglary, **characterized in that** the cleaning device (1) carries out a cleaning job as an alarm.

8. The method for operating a self-propelled cleaning device (1) according to any one of claims 1 to 7, the cleaning device (1) traveling in one or more rooms (3, 4) on the basis of a stored room map (2) and, if necessary, carrying out cleaning jobs therein, the cleaning device (1) furthermore receiving information from a burglar alarm system (10) and outputting an alarm in the event of a burglary, **characterized in that** the cleaning device (1) outputs, as an alarm, a signal containing a human voice by means of a voice output of a recorded conversation, or a sequence of barking of dogs stored in a memory.

9. The method according to claim 7 or 8, **characterized in that** the burglar alarm system (10) detects a presence of a person (8) within a room (3, 4), the burglar alarm system (10) or the cleaning device (1) identifying the person (8) present based on data stored in a memory (11).

10. The method according to claim 9, **characterized in that** the cleaning device (1) accesses a calender program (12) of an external device (13), in particular of a personal computer or a mobile phone, the presence of the person (8) being compared with a current calender entry.

11. The method according to claim 10, **characterized in that** information about the presence of the person (8) is transmitted to an external device (14), in particular a mobile phone.

## Revendications

1. Procédé de fonctionnement d'un dispositif de nettoyage (1) à déplacement automatique, en particulier d'un robot aspirateur et/ou d'essuyage, dans lequel le dispositif de nettoyage (1) se déplace dans une ou plusieurs pièces (3, 4) sur la base d'une carte de(s) pièce (s) (2) en mémoire et y effectue, le cas échéant, des tâches de nettoyage, dans lequel le dispositif de nettoyage (1) reçoit également des informations d'un capteur d'incendie (5) et en particulier déclenche un appel d'urgence en cas d'alarme incendie, **caractérisé en ce que** dans le cas d'une alarme incendie, le dispositif de nettoyage (1) émet un signal acoustique et/ou optique et part de son emplacement actuel vers une sortie de secours (6) ou un emplacement sûr.

2. Procédé selon la revendication 1, **caractérisé en ce que** le dispositif de nettoyage (1) émet un signal permanent ou périodique.

3. Procédé selon la revendication 1 ou 2, **caractérisé en ce que** le dispositif de nettoyage (1) reçoit une alarme incendie d'un capteur d'incendie externe (5) agencé à l'intérieur d'une pièce (3, 4), détermine le lieu de l'incendie en fonction de l'emplacement du capteur d'incendie (5) et détermine un chemin le plus sûr vers la sortie de secours (6) ou l'emplacement sûr sur la base de la carte de(s) pièce(s) (2).

4. Procédé selon l'une des revendications précédentes, **caractérisé en ce que** le dispositif de nettoyage (1) reçoit une alarme incendie d'un capteur d'incendie externe (5) agencé à l'intérieur d'une pièce (3, 4), détermine le lieu de l'incendie en fonction de l'emplacement du capteur d'incendie (5) et détermine un chemin le plus court vers la sortie de secours (6) ou l'emplacement sûr sur la base de la carte de (s) pièce (s) (2).

5. Procédé selon l'une des revendications précédentes, **caractérisé en ce que** le dispositif de nettoyage (1) détecte une personne (8) présente dans la pièce (3, 4) et demande, au moyen d'une sortie vocale, de le suivre à la sortie de secours (6) ou l'emplacement sûr.

6. Procédé selon la revendication 5, **caractérisé en ce que** le dispositif de nettoyage (1) mesure, au moyen d'un dispositif de détection (9), en particulier un capteur acoustique ou à ultrasons, si la personne (8) suit le dispositif de nettoyage (1) vers la sortie de secours (6) ou l'emplacement sûr.

7. Procédé de fonctionnement d'un dispositif de nettoyage à déplacement automatique selon l'une des revendications 1 à 6, dans lequel le dispositif de nettoyage (1) se déplace dans une ou plusieurs pièces (3, 4) sur la base d'une carte de(s) pièce (s) (2) en mémoire et y effectue le cas échéant des tâches de nettoyage, dans lequel le dispositif de nettoyage (1) reçoit en outre des informations d'un système d'alarme de détection d'effraction (10) et émet une alarme en cas d'effraction, **caractérisé en ce que** le dispositif de nettoyage (1) réalise une tâche de nettoyage en guise d'alarme.

8. Procédé de fonctionnement d'un dispositif de nettoyage à déplacement automatique selon l'une des revendications 1 à 7, dans lequel le dispositif de nettoyage (1) se déplace dans une ou plusieurs pièces (3, 4) sur la base d'une carte de(s) pièce (s) (2) en mémoire et y effectue le cas échéant des opérations de nettoyage, dans lequel le dispositif de nettoyage (1) reçoit en outre des informations d'un système d'alarme de détection d'effraction (10) et émet une alarme en cas d'effraction, **caractérisé en ce que** le dispositif de nettoyage (1) émet en guise d'alarme un signal contenant une voix humaine par une sortie vocale d'une conversation enregistrée ou une séquence d'aboiements de chien stockée dans une mémoire.

9. Procédé selon la revendication 7 ou 8, **caractérisé en ce que** le système d'alarme de détection d'effraction (10) détecte la présence d'une personne (8) dans une pièce (3, 4), dans lequel le système d'alarme de détection d'effraction (10) ou le dispositif de nettoyage (1) identifie la personne présente (8) à partir de données stockées dans une mémoire (11).

10. Procédé selon la revendication 9, **caractérisé en ce que** le dispositif de nettoyage (1) accède à un programme de calendrier (12) d'un dispositif externe (13), en particulier un ordinateur personnel ou un téléphone mobile, dans lequel la présence de la personne (8) est comparée à une entrée de calendrier actuelle.

11. Procédé selon la revendication 10, **caractérisé en ce que** des informations sur la présence de la personne (8) sont transmises à un dispositif externe (14), en particulier à un téléphone mobile.
